# EUROPÄISCHE PATENTANMELDUNG

(11) **EP 0 707 228 A1**
(43) Veröffentlichungstag der Anmeldung: **17.04.1996**
(21) Anmeldenummer: 94810598.6
(22) Anmeldetag: 13.10.1994
(51) Int. Cl.: G02B 26/08, G09F 9/37

(54) **Lichtmodulator**

(71) Anmelder: GRETAG Aktiengesellschaft, CH-8105 Regensdorf (CH)
(72) Erfinder: Jacocagni, Fulvio, CH-5415 Nussbaumen (CH)
(74) Vertreter: Kleewein, Walter, Dr.

(57) **Zusammenfassung**

Ein Lichtmodulator weist eine rasterförmige Anordnung von einzelnen Mikrospiegeln (2) auf, die individuell, vorzugsweise elektrostatisch, in Abhängigkeit eines Steuersignals, vorzugsweise eines Fernsehsignals, aus einer Ausgangsstellung in eine Kippstellung bewegbar sind. Auf diese Weise kann eingestrahltes Licht räumlich moduliert werden. Zur Erzeugung der für das individuelle Verkippen der Mikrospiegel (2) erforderlichen elektrostatischen Ladungen ist ein Vielkanal-Sekundärelektronenvervielfacher (3) vorgesehen, von dessen Kanälen (4) je einer je einem Mikrospiegel (2) zugeordnet ist, und der die Steuersignale verstärkt und die erforderlichen elekrischen Ladungsmengen bereitstellt.

## Beschreibung

Die Erfindung betrifft einen Lichtmodulator mit einer rasterförmigen Anordnung von Mikrospiegeln zur räumlichen Modulation von eingestrahltem Licht gemäss Oberbegriff des Patentanspruchs 1.

Lichtmodulatoren oder sogenannte Lichtventile werden für verschiedene technische und wissenschaftliche Einsatzgebiete benötigt. Eine sehr wichtige und immer stärker verbreitete Anwendung besteht in der Grossbildprojektion von Fernsehbildern. Derartige Grossbildprojektoren werden vermehrt bei Sportveranstaltungen, bei grossen Kongressen oder auch bei Flugsimulatoren oder ähnlichen Einrichtungen eingesetzt. Während in der Vergangenheit für derartige Geräte spezielle Optiken verwendet wurden, bei der das Licht mit Hilfe von in Ölfilmen erzeugten Schlieren einem Fernsehsignal gemäss räumlich moduliert wurde, sind neuerdings auch sogenannte mikromechanische Lichtventile bekannt geworden. Ein derartiges mikromechanisches Lichtventil ist beispielsweise in SPIE, Vol.825 Spatial Light Modulators and Applications II (1987), Seiten 24-31, beschrieben. Dieses bekannte Lichtventil umfasst eine Vielzahl von kleinen kippbaren Spiegeln, die rasterförmig angeordnet sind und in Abhängigkeit eines Steuersignals, beispielsweise eines Fernsehsignals, aus einer Ruhestellung verkippbar sind. Jedem Mikrospiegel ist ein separater Transistor zugeordnet, der durch das Steuersignal aktivierbar ist. Die Auslenkung der Mikrospiegel erfolgt durch die anziehende Wirkung von elektrostatischen Ladungen, die durch die Aktivierung der einzelnen Transistoren an den entsprechenden Senken aufgebaut werden. Dabei wirken die Senkenbereiche und die zugeordneten Mikrospiegel jeweils wie ein Luftkondensator.

Die rasterförmige Anordnung der Ansteuertransistoren und der Wunsch nach Miniaturisierung der Anordnung legte es nahe, diese als integrierten Schaltkreis auszubilden. Auf diese Weise konnte auf die zwar relativ komplexen aber doch bekannten Fertigungstechniken aus der Halbleiterproduktion zugegriffen werden. Allerdings bestehen bei der Anwendung von Halbleiterfertigungstechniken immer Ausbeuteprobleme. Aufgrund der pixelartigen Anordnung der Mikrospiegel ist die Integrationsdichte sehr hoch. Dies zusammen mit der sich bei jedem zusätzlichen Fertigungsschritt erhöhenden Defektdichte führt zu einem relativ hohen Ausfallsrisiko einzelner Pixel eines Feldes von Mikrospiegeln, ja ganzer Bereiche mit kippbaren Mikrospiegeln. Ein weiterer Nachteil der Kombination von integrierten Transistorfeldern und Mikrospiegeln besteht darin, dass für die Ansteuerung von Mikrospiegelfeldern nicht jeder Transistor mit eigenen Anschlüssen versehen werden kann, sondern dass zusätzlich spezielle Multiplexer und Demultiplexerschaltungen auf dem Transistorfeld integriert werden müssen. Dies wiederum verkompliziert den integrierten Schaltkreis weiter und vergrössert das Ausbeuterisiko.

Aufgabe der vorliegenden Erfindung ist es daher, einen Lichtmodulator bzw. ein mikromechanisches Lichtventil dahingehend zu verbessern, dass den vorstehenden Problemen abgeholfen wird. Das Ausfallsrisiko von einzelnen Mikrospiegeln oder gar von ganzen Bezirken von rasterförmig angeordneten Mikrospiegeln soll vermieden werden. Auf komplexe zusätzliche Ansteuerungsschaltelemente soll verzichtet werden können. Es soll ein mikromechanisches Lichtventil geschaffen werden, welches relativ einfach und kostengünstig herstellbar ist und einfach beispielsweise in Grossbildprojektionssystemen einsetzbar ist.

Die Lösung all dieser und noch weiterer damit zusammenhängender Probleme besteht in einem Lichtmodulator mit einer rasterförmigen Anordnung von Mikrospiegeln zur räumlichen Modulation von eingestrahltem Licht, der die im kennzeichnenden Teil des Patentanspruchs 1 angeführten Merkmale aufweist. Besonders bevorzugte Ausführungsvarianten des erfindungsgemässen Lichtmodulators sind Gegenstand der abhängigen Patentansprüche. Der erfindungsgemässe Lichtmodulator weist eine rasterförmige Anordnung von einzelnen Mikrospiegeln auf, die individuell elektrostatisch in Abhängigkeit eines Steuersignals, vorzugsweise eines Fernsehsignals, aus einer Ausgangsstellung in eine Kippstellung bewegbar sind. Auf diese Weise kann eingestrahltes Licht räumlich moduliert werden. Zur Erzeugung der für das individuelle Verkippen der Mikrospiegel erforderlichen elektrostatischen Ladungen ist ein Vielkanal-Sekundärelektronenvervielfacher vorgesehen, von dessen Kanälen je einer je einem Mikrospiegel zugeordnet ist, und der die Steuersignale verstärkt und die erforderlichen elektrischen Ladungsmengen bereitstellt. Durch den Einsatz eines Vielkanal-Sekundärelektronenvervielfachers als "Generator" für die erforderlichen elektrostatischen Ladungsmengen kann auf Transistorfelder verzichtet werden. Auf diese Weise werden auch die bei der Herstellung von integrierten Schaltkreisen üblicherweise limitierenden Ausbeuteprobleme und damit das Ausfallsrisiko von einzelnen Mikrospiegeln bzw. von ganzen Bezirken von rasterförmig angeordneten Mikrospiegeln vermieden. Jeder Kanal des Vielkanal-Sekundärelektronenvervielfachers ist individuell direkt ansteuerbar, sodass auf zusätzliche komplexe Multiplexer- bzw. Demultiplexereinrichtungen verzichtet werden kann. Der erfindungsgemässe Lichtmodulator ist relativ einfach herstellbar, insbesondere kann dabei auf kommerziell erhältliche Vielkanal-Sekundärelektronenvervielfacher zurückgegriffen werden, welche verhältnismässig preiswert und in den gewünschten kompakten Ausführungen erhältlich sind.

Im folgenden wird die Erfindung mit allen ihr als wesentlich zugehörigen Einzelheiten an einem Ausführungsbeispiel näher erläutert. Es zeigen:
- Fig. 1: eine schematische Prinzipdarstellung des erfindungsgemässen Lichtmodulators,
- Fig. 2: einen Ausschnitt des Lichtmodulators gemäss Fig.1 mit einem verkipptem Mikrospiegel, und
- Fig. 3: ein Schema einer Projektionseinrichtung mit einem erfindungsgemässen Lichtmodulator.

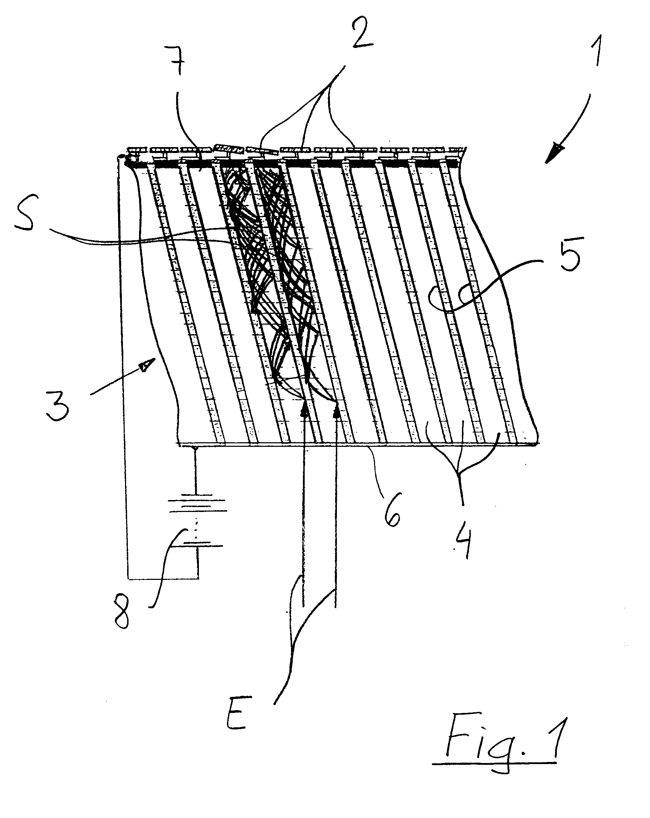

In der schematischen Prinzipdarstellung in Fig. 1 ist der erfindungsgemässe Lichtmodulator gesamthaft mit 1 bezeichnet. Der Lichtmodulator 1 umfasst eine Anzahl von rasterförmig angeordneten Mikrospiegeln 2, die individuell in Abhängigkeit eines Steuersignals aus ihrer Ruhelage in eine Kippstellung bewegbar sind. Beispielsweise ist dieses Steuersignal ein Fernsehsignal. Die Verkippung der Mikrospiegel 2 erfolgt dabei bevorzugt durch die Wirkung elektrostatischer Kräfte auf die Mikrospiegel aus elektrisch leitfähigem Material. Gemäss der Erfindung umfasst der Lichtmodulator 1 zur Erzeugung der erforderlichen elektrostatischen Ladungen einen Vielkanal-Sekundärelektronenvervielfacher 3. Dabei ist jeder Kanal 4 des Sekundärelektronenvervielfachers 3 genau einem Mikrospiegel 2 zugeordnet. In Abhängigkeit des Steuersignals werden Primärelektronen E erzeugt, die an der Eingangsseite 6 des Sekundärelektronenvervielfachers in einen entsprechenden Kanal 4 gelangen und dort aus der Kanalinnenwandung 5 Sekundärelektronen S herausschlagen. Eine Spannungsquelle 8 sorgt zwischen der Eingangseite 6 und der Ausgangsseite 7 des Sekundärelektronenvervielfachers 3 für eine Potentialdifferenz. Die Sekundärelektronen S werden im resultierenden elektrischen Feld beschleunigt, treffen wieder auf die Kanalinnenwandung 5 und schlagen in Abhängigkeit ihrer Energie weitere Sekundärelektronen S heraus usw. Durch die entstehende Ladungslawine wird das in den Kanal 4 eingespiesene Signal verstärkt, und es werden genügend Ladungsträger erzeugt, um den an der Ausgangseite 7 dem Kanal 4 zugeordneten Mikrospiegel 2 zu verkippen.

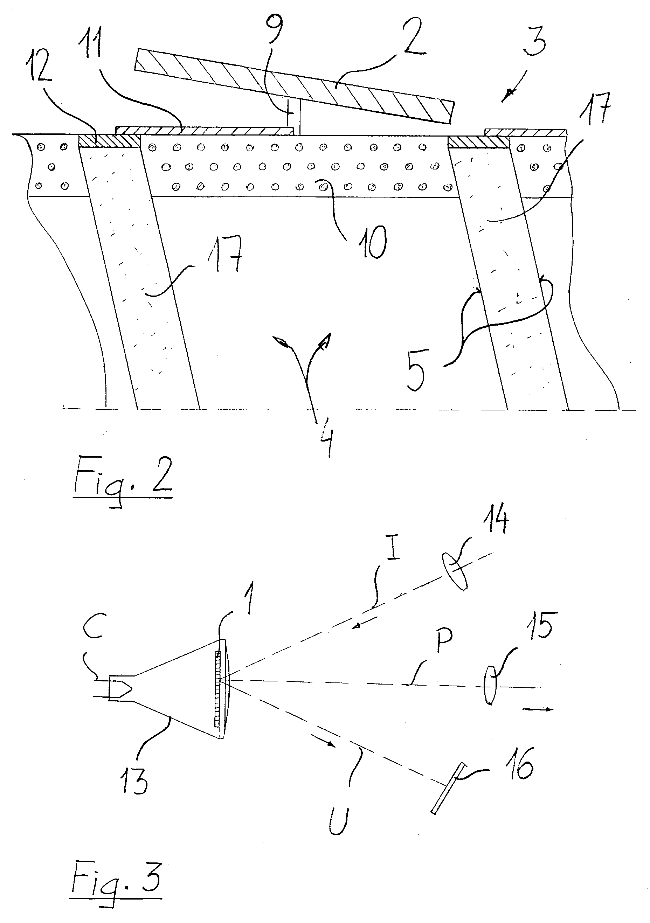

In der schematischen Ausschnittsdarstellung des Lichtmodulators 1 in Fig. 2 ist die Ausgangsseite des Sekundärelektronenvervielfachers 3 dargestellt. Insbesondere handelt es sich bei dem Sekundärelektronenvervielfacher 3 um eine Mikrokanalplatte. Mikrokanalplatten sind besonders geeignet, weil bei ihnen bereits eine rasterförmige Anordnung der einzelnen Kanäle 4 vorliegt. Die Feinheit der Kanäle 4 der Mikrokanalplatte 3 erlaubt es, auf engstem Raum, beispielsweise bei einer Fläche von 45 x 45 mm² eine Anzahl von 2250 x 2250 Spiegelzellen bzw. bei HDTV-Anwendungen mit einem Seitenverhältnis von 19 : 9 und einer Fläche von 51,8 x 29,1 mm² 2590 x 1455 Einzelspiegeln im Raster vorzusehen. Die Grösse einer einzelnen Spiegelzelle beträgt dabei nur etwa 20 x 20 µm². An der Ausgangsseite 7 eines jeden Kanals 4 der Mikrokanalplatte 3 ist eine Kondensatorplatte 10 angeordnet, welche die durch die Ladungslawine erzeugten Sekundärelektronen S aufnimmt. Zur Herstellung der Kondensatorplatten 10 an der Ausgangsseite 7 der Mikrokanalplatte 3 werden beispielsweise die Kanäle 4 bis zu einer bestimmten Höhe mit einer wachsartigen Substanz gefüllt. Anschliessend wird ein schwach leitfähiges Material aufgedampft und den Kanälen 4 entsprechend strukturiert. Danach wird die wachsartige Substanz wieder aus den Kanälen entfernt. Zurück bleibt eine Mikrokanalplatte mit ausgangsseitig jeweils durch eine Kondensatorplatte 10 verschlossenen Mikrokanälen 4. Die Kondensatorplatte 10 besteht vorzugsweise aus schwach leitendem Material, beispielsweise aus Ta₂O₅, Ti₂O₃ oder aus schwach dotiertem Polysilizium.

In einem Abstand von der Kondensatorplatte 10 sind die zugehörigen Mikrospiegel 2 auf einer stumpfartigen Halterung 9 angeordnet. Die Halterung 9 ist fest mit dem Mikrospiegel 2 und auch mit der Kondensatorplatte 10 verbunden und erstreckt sich etwa mittig aus der Kondensatorplatte 10. Sie weist eine gute Leitfähigkeit auf. Eine gleichfalls gut leitfähige Feldelektrode 11 ist mit der Oberseite der Kondensatorplatte 10 leitend verbunden und erstreckt sich vom Rand des Kanals 4 bis etwa zur Kanalmitte. Derart angeordnet liegt die Feldelektrode 11 einer Hälfte des zugehörigen Mikrospiegels 2 gegenüber. Die Feldelektrode 11 besteht vorzugsweise aus Aluminium. Der Mikrospiegel 2 weist ebenfalls eine gute Leitfähigkeit auf. Beispielsweise ist er zur Gänze aus Aluminium oder aus einem Material, dass eine gute Leitfähigkeit aufweist.

Der Mikrospiegel 2, die stumpfartige Halterung 9 und die Feldelektrode 11 sind kurzgeschlossen und jeweils elektrisch mit Entladeelektroden 12 verbunden, die ausgangseitig der Mikrokanalplatte 3 oberhalb der Trennbereiche 17 zwischen den Mikrokanälen 4 angeordnet sind. Auf diese Weise sind die Kondensatorplatten 10 durch die Entladeelektroden 12 getrennt Die Entladeelektroden 12 dienen zur Ableitung der sich auf der Feldelektrode 11 und dem Mikrospiegel 2 ansammelnden elektrischen Ladungen.

Die Leitfähigkeit der Kondensatorplatten 10 ist derart eingestellt, dass die auf der Kondensatorplatte 10 befindlichen elektrostatischen Ladungen langsam automatisch einerseits zur Feldelektrode 11 und andererseits über die gut leitfähige stumpfartige Halterung 9 zum Mikrospiegel wandern. Die Entladezeit für die Kondensatorplatte 10 beträgt dabei typisch etwa 18 ms. Die Verkippung des Mikrospiegels 2 erfolgt durch die elektrostatische Abstossung zwischen dem mit Ladungsträgern besetzten Mikrospiegels 2 und der gleichartig geladenen Feldelektrode 11. Zum Verkippen des Mikrospiegel 2 kommt es dabei durch die einseitig auf den Mikrospiegel 2 wirkende Abstossungskraft.

Zur Herstellung der Mikrospiegel 2 auf den mit Kondensatorplatten 10 einseitig verschlossenen Kanälen 4 der Mikrokanalplatte 3 und der erforderlichen Elektroden können die aus der Mikromechanik und der Halbleiterindustrie dem Fachmann hinlänglich bekannten Techniken angewendet werden.

In Fig.3 ist eine ganz besonders bevorzugte Anwendung des erfindungsgemässen Lichtmodulators 1 schematisch dargestellt. Insbesonder handelt es sich dabei um eine Projektionseinrichtung, wie sie beispielsweise in der Grossbildprojektion von Video- und Fernsehbildern oder ähnlichem eingesetzt werden kann. Bei der dargestellten Anordnung ist der Lichtmodulator 1 innerhalb einer Kathodenstrahlröhre 13 an Stelle des Phosphorschirms angeordnet. Auf diese Weise bildet die Eingangseite 6 der Mikrokanalplatte 3 die Projektionsebene der Kathodenstrahlröhre 13. Die Kathodenstrahlröhre 13 wird in bekannter Weise mit dem Fernsehsignal C gespeist, der daraus resultierende auf übliche Weise amplitudenmodulierte Elektronenstrahl steuert den Lichtmodulator 1. Auf diese Weise reduziert sich die Ansteuerung des Lichtmodulators 1 auf die Ansteuertechnik eines Fernsehmonitors.

Das für die Grossbildprojektion benötigte Licht I wird über eine Beleuchtungsoptik 14 ganzflächig auf den Lichtmodulator 1 eingestrahlt. Das an der Kathodenstrahlröhre anliegende und zu projizierende Fernsehsignal C steuert den Lichtmodulator 1 in der gewünschten Weise und bewirkt ein Verkippen einzelner oder Gruppen von Mikrospiegeln 2 in Abhängigkeit des anliegenden und über die Mikrokanalplatte verstärkten Fernsehsignals. In ihrer Ausgangstellung - unverkippt - reflektieren die Mikrospiegel 2 das einfallende Licht I zu einer Stopp-Blende 16. Dieses reflektierte Licht U steht also für die Projektion nicht zur Verfügung. Die den unverkippten Mikrospiegeln 2 entsprechenden Pixel bleiben dunkel. Von den verkippten Mikrospiegeln 2 wird das einfallende Licht I aber als Projektionslicht P zu einer Projektionsoptik 15 reflektiert und über diese auf einen nicht dargestellten Schirm abgebildet. Die den Positionen der verkippten Mikrospiegel 2 entsprechenden Pixel des Schirmes erscheinen hell. Auf diese Weise können einfarbige bzw. schwarz-weisse grossformatige Projektionen von Video- oder Fernsehbildern sehr einfach realisiert werden. Für die Projektion eines Farbbildes wird für jede der Grundfarben Rot, Grün und Blau ein separater Lichtmodulator in einer eigenen Kathodenstrahlröhre vorgesehen. Die Steuersignale der Lichtmodulatoren sind in diesem Fall die jeweiligen Rot-, Grün- oder Blausignale des Video- oder Fernsehbildes.

Durch den Einsatz eines Vielkanal-Sekundärelektronenvervielfachers als "Generator" für die erforderlichen elektrostatischen Ladungsmengen kann auf Transistorfelder ganz verzichtet werden. Auf diese Weise werden die bei der Herstellung von integrierten Schaltkreisen üblicherweise limitierenden Ausbeuteprobleme und damit das Ausfallsrisiko von einzelnen Mikrospiegeln bzw. von ganzen Bezirken von rasterförmig angeordneten Mikrospiegeln vermieden. Jeder Kanal des Vielkanal-Sekundärelektronenvervielfachers ist individuell direkt ansteuerbar, sodass auf zusätzliche komplexe Multiplexer- bzw. Demultiplexereinrichtungen verzichtet werden kann. Der erfindungsgemässe Lichtmodulator ist relativ einfach herstellbar, insbesondere kann dabei auf kommerziell erhältliche Vielkanal-Sekundärelektronenvervielfacher zurückgegriffen werden, welcher verhältnismässig preiswert und in den gewünschten kompakten Ausführungen erhältlich sind. Die Integration des Lichtmodulators in eine Kathodenstrahlröhre an Stelle des Phosphorschirmes ergibt eine besonders einfache Projektionsanordnung beispielsweise für Grossbildprojektionen. Die gesamte Ansteuerung reduziert sich auf die konventionelle Ansterungstechnik eines Fernsehmonitors. Die Erfindung ist kompakt in ihren Abmessungen und erlaubt die Herstellung sehr kompakter Projektionsanordnungen.

## Patentansprüche

1. Lichtmodulator umfassend eine rasterförmige Anordnung von einzelnen Mikrospiegeln (2), die individuell, vorzugsweise elektrostatisch, in Abhängigkeit eines Steuersignals (C), vorzugsweise eines Fernsehsignals, aus einer Ausgangsstellung in eine Kippstellung bewegbar sind, um eingestrahltes Licht räumlich zu modulieren, gekennzeichnet durch einen Vielkanal-Sekundärelektronenvervielfacher (3) zur Erzeugung der für das individuelle Verkippen der Mikrospiegel (2) erforderlichen elektrostatischen Ladungen, von dessen Kanälen (4) je einer je einem Mikrospiegel (2) zugeordnet ist.

2. Vorrichtung nach Anspruch 1, dadurch gekennzeichnet, dass die einzelnen Mikrospiegel (2) auf einem Trägerelement angeordnet sind, welches eine Mikrokanalplatte umfasst, deren einzelne Kanäle (4) den Sekundärelektronenvervielfacher (3) bilden.

3. Vorrichtung nach Anspruch 2, dadurch gekennzeichnet, dass die Eingangseite (6) der Mikrokanalplatte (3) die Projektionsebene einer Kathodenstrahlröhre (13) bildet, die vorzugsweise mit einem Fernsehsignal (C) betrieben wird, und dass ausgangs (7) der Mikrokanalplatte (3) jedem Kanal (4) eine Kondensatorplatte (10) zugeordnet ist, die zur Aufnahme einer bestimmten elektrostatischen Ladungsmenge ausgebildet ist, welche auf den dem jeweiligen Kanal (4) zugeordneten Mikrospiegel (2) eine Kraft ausübt, die ausreicht ihn gegenüber der Ruhestellung zu verkippen.

4. Vorrichtung nach Anspruch 3, dadurch gekennzeichnet, dass die ausgangs (7) jedes Kanals (4) der Mikrokanalplatte (3) vorgesehene Kondensatorplatte (10) eine Leitfähigkeit besitzt, die eine langsame automatische Entladung der Kondensatorplatte (10) über damit verbundene Elektroden (11,12) erlaubt.

5. Vorrichtung nach Anspruch 4, dadurch gekennzeichnet, dass die Kondensatorplatte (10) aus schwach leitendem Material, beispielsweise aus Ta₂O₅, Ti₂O₃ oder aus dotiertem Polysilizium besteht.

6. Vorrichtung nach Anspruch 4 oder 5, dadurch gekennzeichnet, dass die Elektroden (11,12) aus Metall, insbesondere aus Aluminium, oder aus einem metalldotierten oder sonstwie leitfähig gemachten Material bestehen.

7. Vorrichtung nach einem der vorangehenden Ansprüche, dadurch gekennzeichnet, dass die Mikrospiegel (2) aus einem gut leitfähigen Material, vorzugseise aus Aluminium besteht.

8. Vorrichtung nach einem der Ansprüche 3-7, dadurch gekennzeichnet, dass jeder Mikrospiegel (2) auf einem stumpfartigen Halteelement (9) befestigt ist, welches fest mit der Kondensatorplatte (10) verbunden ist und sich etwa mittig aus dieser erstreckt und eine gute Leitfähigkeit aufweist.

9. Vorrichtung nach Anspruch 8, dadurch gekennzeichnet, dass jeweils ein Mikrospiegel (2), das zugehörige Halteelement (9) und die ihm zugeordneten Elektroden (11,12) elektrisch kurzgeschlossen sind.

10. Projektionsanordnung nach dem Prinzip der Schlieren-Projektion, gekennzeichnet durch wenigstens einen Lichtmodulator (1) nach einem der vorangehenden Ansprüche.

11. Projektionsanordnung nach Anspruch 8, dadurch gekennzeichnet, dass für jede der Grundfarben Rot, Grün und Blau ein Lichtmodulator (1) nach einem der Ansprüche 1-7 vorgesehen ist.
